# EUROPEAN PATENT SPECIFICATION

(11) **EP 0 899 160 B1**
(45) Date of publication and mention of the grant of the patent: **15.12.2004**
(21) Application number: 98109434.5
(22) Date of filing: 25.05.1998
(51) Int. Cl.: B62D 43/10

(54) **Storage unit for a lifting jack**
Aufbewahrungseinheit für einen Wagenheber
Ensemble de rangement pour cric de véhicule

(30) Priority: 27.08.1997 IT TO970762
(43) Date of publication of application: 03.03.1999
(73) Proprietor: ERGOM HOLDING S.p.A, 10071 Borgaro Torinese (Torino) (IT)
(72) Inventor: Cimminelli, Francesco, 10143 Torino (IT); Siviero, Eugenio, 10040 Rivalta (Torino) (IT); Castagneri, Giulio, 10076 Nole (Torino) (IT)
(74) Representative: Gerbino, Angelo

(56) References cited:
- DE-A- 19 701 371
- DE-C- 3 323 559
- DE-U- 8 008 621
- DE-U- 29 503 995
- DE-U- 29 504 407
- FR-A- 2 744 771

## Description

The present invention concerns a support assembly for a jack comprising:
- a housing that can be fitted into the spare wheel of a vehicle and which defines a cavity shaped to house the jack, and
- releasable anchorage means for fixing the housing to the vehicle body, associated with the base of the housing and capable of assuming a closed position in which the housing and the spare wheel are both fixed to the body, and an open position in which both the housing and the spare wheel can be removed from the body.

An assembly of the type defined above is known from Italian utility model application number T094U000057 in the name of the same Applicant. This assembly comprises a housing from the base of which extends a cup-like body provided with a hole for engaging part of an attachment member having a knob to which is fixed a relatively long screw capable of cooperating with a nut fixed to the vehicle body.

However, the presence of the attachment member having a separate screw means makes the entire assembly relatively expensive and heavy. Furthermore, it is not very practical to use as it is difficult to engage the screw in the associated nut and a certain amount of time is required to completely unscrew or screw the screw member when it is desired to separate or fix the housing and/or the spare wheel to the vehicle body. It is in particular necessary to tightly screw the screw member in order to avoid play between the vehicle body, the housing and the spare wheel, which would certainly give rise to annoying noises when the vehicle is operating. However, following to the operation of the vehicle, accompanied by the inevitable vibrations to which it is subject, the screw member can become loose, so that play can easily arise even if the screw member is tightened to the base. Furthermore, the fact that the attachment member is made as an independent part of the jack-holder housing constitutes a further disadvantage, as it is possible to misplace this member when it is separated from the jack-holder housing.

More specifically, the present invention relates to a support assembly for a jack having the features disclosed in the preamble of claim 1. A known support assembly of this kind is disclosed in DE-C-33 23 559 and has the disadvantage of requiring to remove the content from the housing thereof in order to be able to disengage this latter from the vehicle body.

In order to overcome the aforesaid disadvantages, the subject of the invention is a jack-holder assembly of the type specified in claim 1 which follows.

By virtue of the claimed characteristics, the assembly according to the invention can be installed on and removed from the vehicle extremely rapidly and practically. In particular, when installed, it is able to lock the housing and the spare wheel to the vehicle body in a way that is completely reliable and without any play, even following prolonged operation of the vehicle. The jack-holder housing is thus simpler, requiring less material for its manufacture, and allows that more useful space is available within the housing. The assembly is therefore overall less costly and lighter than the previously-known assemblies, and completely avoids the risk of misplacing the locking member.

Further characteristics and advantages of the invention will become clearer from the following detailed description, given purely by way of non-limitative example and with reference to the accompanying drawings in which:
Figure 1 is an overall exploded perspective view of the assembly according to the invention;
Figure 2 is a perspective view on an enlarged scale of a detail of the assembly of Figure 1, indicated by the arrow II in Figure 1;
Figure 3 is an elevational sectional view of the assembly of Figure 1 mounted on a vehicle;
Figure 4 is an elevational side sectional view of a detail indicated by the arrow IV in Figure 2; and
Figure 5 is an elevational view of the detail of Figure 4 from the direction of the arrow V.

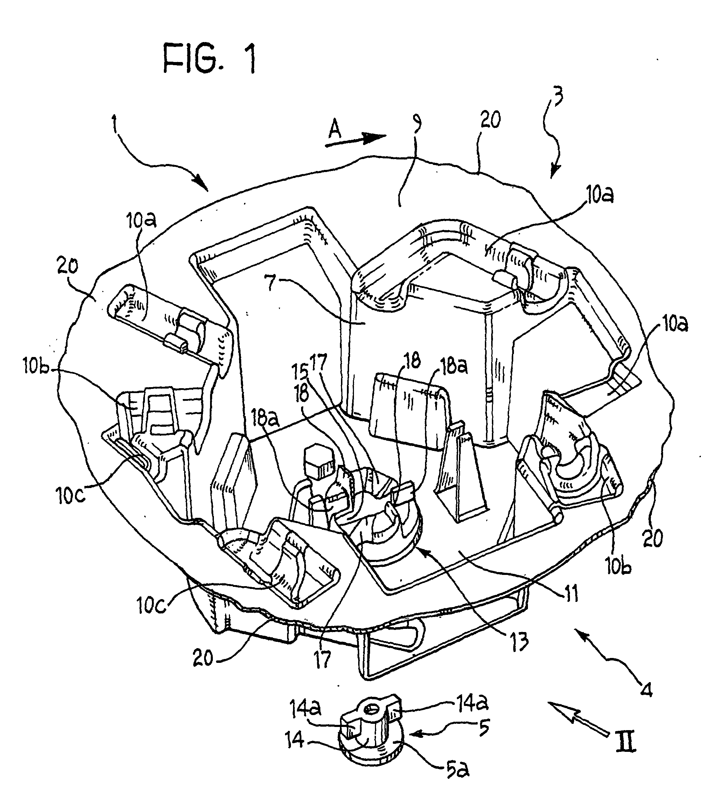

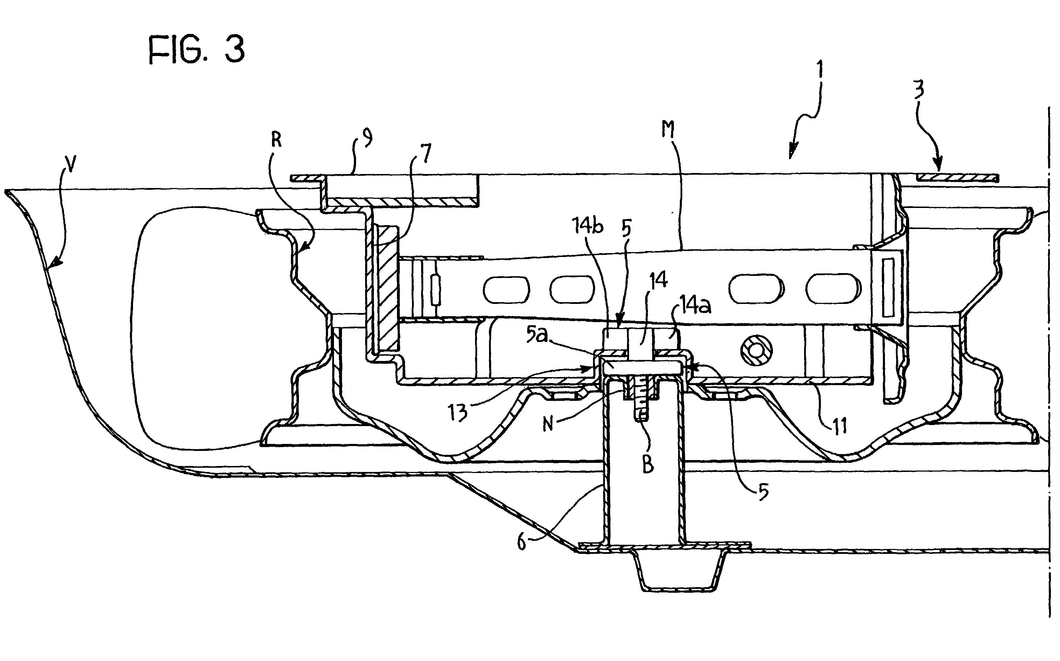

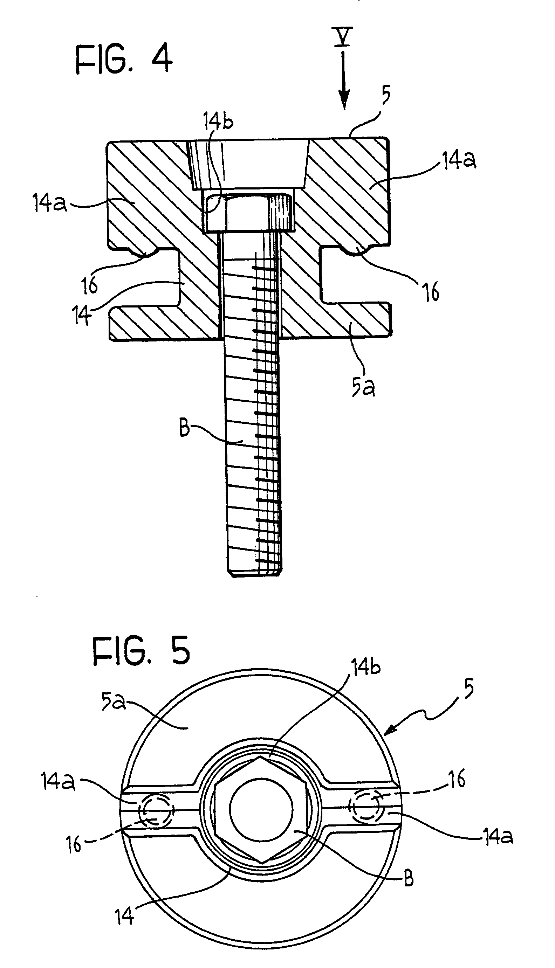

Referring initially to Figures 1 to 5, the reference numeral 1 generally indicates a support assembly for a jack for raising a vehicle, identified in Figure 3 with the letter M.

The assembly 1 comprises a housing 3, usually made from moulded plastics material, shaped so that it can be fitted into the spare wheel R located in a space V of the body of the vehicle, typically in the luggage compartment. The housing 3 can be fixed to the vehicle body, simultaneously locking the wheel R in the space V, by means of releasable anchorage means 4, generally of the bayonet-engagement type, capable of assuming a closed locked position or an open position in which the housing 3 and the spare wheel R can be removed from the space V.

The anchorage means 4 comprise an engagement member 5 having a base 5a that can usually be fixed to a cup-like body 6 which extends upwards from a cavity of the space V in a position corresponding to a central hole in the wheel R, and a shaped member 13 associated with the housing 3. The engagement member 5 can be fixed to the body 6, for example, by means of a screw B inserted in an axial through-hole 14b formed therein to engage a nut N (see Figure 3), preferably of the self-locking type or provided with known anti-unscrewing means. Alternatively, the member 5 can be fixed to the body 6 using other known systems, for example, it can be adhesive bonded on the head of the cup-like body 6 or welded thereto, or the head of the cup-like body 6 can be formed with a shape corresponding to that of the member 5.

In particular, the housing 3 includes a substantially cylindrical side wall 7, for example, of polygonal transverse section, having an upper portion 9 which may, for example, be a bracket shape, in which a plurality of seats for housing and locking the tools of the vehicle are formed. Typically, a series of seats 10a is formed for holding a handle for operating the jack M, a series of seats 10b is formed for holding a key for the screws fixing the wheel R to a respective hub, and a series of seats 10c is formed for holding a screwdriver.

On the part opposite the upper portion 9, the housing 3 has a base wall 11 intended to be disposed in frontal contact on the wheel R, specifically inside the wheel disc, from the centre of which extends a shaped circular body 13 which projects upwards to a lesser extent with respect to the base 11. The lesser height of the body 13 not only enables the housing 3 to be made using less material than previously known similar housings, but also means that more useful space is available within the housing 3. For example, other tools, such as a portable tow hitch, can be disposed in this space which, in previously known housings, due to the lack of internal space, had to be kept at the upper portion 9, with the risk of overloading this portion, causing the walls 7 to bend and giving rise to annoying vibrations.

The body 13 has an upper face in which is a diametral slot-like aperture 15 having a central hole for the axial insertion of the member 5, in particular, to enable the insertion of a cylindrical guide rod 14 and a pair of wing-like elements 14a thereof which project radially from the rod 14. Advantageously, the member 5 is made in a colour that contrasts with that of the material constituting the housing 3. This facilitates the operation for inserting the member 5 through the aperture 15.

A pair of arcuate cam surfaces 17, coaxial with the shaped body 13, is associated with the aperture 15 of the body 13, each of which extends over approximately 90° from an associated half-portion of the aperture 15. Each cam surface 17 comprises a first flat portion 17a, an inclined ramp 17b and a stop zone 17c intended to receive an associated wing 14a in the stationary position when the anchorage means 4 are in the closed position. An abutment 18 for stopping a wing 14a at the end of its movement over the associated cam surface 17 is present at the end of each stop zone 17c, opposite the inclined ramp 17b. A further abutment 18a can be formed next to a half-portion of the aperture 15 opposite an associated cam surface 17 in order to enable the wings 14a to turn only towards the cam surfaces 17.

The passage of the anchorage means 4 from the closed position to the open position, or from the open position to the closed position, may also be achieved by a relative rotation of the member 5 and the cam surfaces 17. Where the cam surfaces 17 are formed integrally with the base 11 of the housing 3, this relative rotation can be achieved upon rotation of the housing 3 with respect to the vehicle body to which the member 5 is fixed. Advantageously, the housing 3 has formations to assist manual gripping and rotation thereof, for example, in the form of corrugated grip portions 20 formed on the perimetral edge of its upper portion 9. Alternatively, the cam surfaces 17 can be formed on a body rotatably mounted and axially fixed to the base 11, possibly provided with a knob for manual operation, so that the relative rotation of the cam surfaces 17 and the member 5 can be obtained by rotation of this rotatable body alone with respect to the member 5, without the need to rotate the entire housing 3.

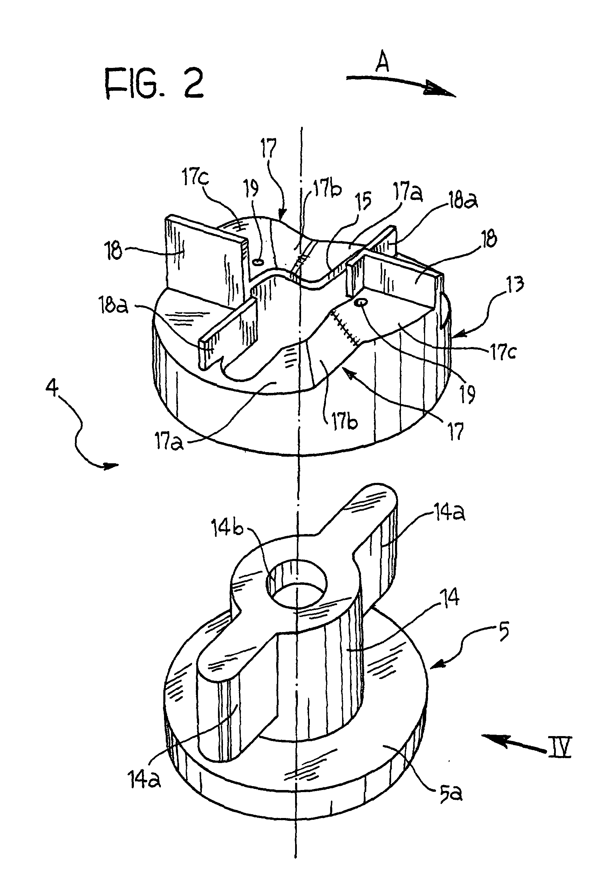

Preferably, means are provided for retaining each wing 14a with respect to an associated stop zone 17c of the body 13, in the closed position of the anchorage means 4. The retention means can be formed, as illustrated in Figures 2, 4 and 5, in the form of a pair of projections 16 which extend downward from each of the wings 14 towards the base 5a of the member 5, and a pair of corresponding seats 19 formed on each stop zone 17c, for the engagement by the projections 16. Alternatively, each stop zone 17c could be shaped to present a slight radial depression with respect to the shaped body 13, to form a seat for receiving a lower face of an associated wing 14a.

In use, the member 5 is fixed to the cup-like element 6, as mentioned above. The wheel R is inserted into the space V in such a way that the member 5 extends from the central hole of its rim. The housing 3 can then be positioned within the cavity defined by the rim of the wheel R after possibly having inserted the jack M therein, engaging the rod 14 and the associated wings 14a in the hole 15. The housing 3 can now be manipulated by grasping the grip portions 20, and rotated about the general axis of the member 5 by approximately 90° in the direction indicated by the arrow A in Figures 1 and 2, in particular, without requiring any screwing operation by the user, so as to cause the wings 14a to ride over the cam surfaces 17 until the wings 14 abut against the associated abutments 18.

In particular, the wings 14a rise along the inclined ramps 17b until they reach the stop zones 17c where they engage with the retention means 19.

In order to release the housing 3 and, at the same time, free the wheel R, a counter-rotation of 90° in the opposite direction to that indicated by the arrow A in Figures 1 and 2 is caused so as to move the wings 14a from the stop zones 17c to the ramps 17b which now lead downward, and from these to the surfaces 17a until they make contact with the abutments 18a. The axial extraction of the housing 3 thus enables the wheel R to be released.

Conveniently, an arrow or other graphic element can be stamped on or applied to the housing 3 in a position visible from the outside in order to indicate the direction of rotation necessary for its engagement and/or release with respect to the member 5.

## Claims

1. A support assembly for a jack comprising:
- a housing (3) that can be fitted into the spare wheel (R) of the vehicle and which defines a cavity;
- releasable anchorage means (4) for fixing the housing (3) to the vehicle body (V), associated with the base (11) of the housing (3) and capable of assuming a closed position in which the housing (3) and the spare wheel (R) are both fixed to the body (V), and an open position in which both the housing (3) and the spare wheel (R) can be removed from the body (V); wherein
the anchorage means comprise a pair of formations (5, 13), one intended to be fixed to the body (V) and the other connected to the housing (3), these formations (5, 13) being mutually engagable and shaped such that passing of the anchorage means (4) from the open position to the closed position, or from the closed position to the open position, is obtainable by rotation of the formation (13) connected to the housing (3) with respect to the formation (5) intended to be fixed to the vehicle body (V), said assembly being **characterised in that** passing of the anchorage means (4) between the open position and the closed position, or between the closed position and the open position, can be obtained by rotation around the axis of the spare wheel (R) through approximately 90° of the formation (13) connected to the housing (3) with respect to the formation (5) intended to be fixed to the body (V) and **in that** said cavity is shaped to house the jack (M).

2. An assembly according to Claim 1, **characterised in that** the formation (13) connected to the housing (3) is rigidly fixed to the housing (3), and **in that** the housing (3) has, in proximity to its end opposite the base (9), handle portions (20) to assist its manual rotation.

3. An assembly according to any of Claims 1 to 2, **characterised in that** the said pair of formations comprises an engagement member (5) provided with at least one radially projecting element (14a), and a shaped body (13) having an aperture (15) for the insertion of the said at least one projecting element (14a), the aperture (15) being disposed adjacent at least one cam surface (17) slidingly engageable by the said at least one projecting element (14a) in passing of the anchorage means (4) from the open position to the closed position, or from the closed position to the open position.

4. An assembly according to Claim 3, **characterised in that** the engagement member (5) has a pair of diametrically-opposed projecting elements (14a) and is intended to be fixed to the vehicle body (V), the shaped body (13) being formed on the base (11) of the housing (3) so as to enable the insertion of the said pair of projecting elements (14a).

5. An assembly according to Claim 3 or Claim 4, **characterised in that** each of the said cam surfaces (17) has an inclined ramp (17b) and a stop zone (17c) contiguous with the inclined ramp (17b) and capable of receiving an associated projecting element (14a) in the closed position of the anchorage means (4).

6. An assembly according to Claim 5, **characterised in that** an abutment (18) determining the end of the sliding motion of an associated projecting element (14a) on the cam surface (17) is present at one end of the stop zone (17c), opposite the associated ramp (17b).

7. An assembly according to Claim 5 or Claim 6, **characterised in that** it includes mutual retaining means (16, 19) for a projecting element (14a) and an associated stop zone (17c), in the closed position of the anchorage means (4).

8. An assembly according to Claim 7, **characterised in that** the said retaining means include an axial projection (16) and a corresponding seat (19), one formed on the projecting element (14a) of the engagement member (5) and the other on a stop zone (17c), in positions corresponding to the closed position of the anchorage means (4).

9. An assembly according to any of Claims 1 to 8, **characterised in that** the housing comprises seats (10a, 10b, 10c) for holding and locking tools.

10. An assembly according to any of Claims 1 to 9, **characterised in that** the formation (5) intended to be fixed to the body (V) is in a colour that contrasts with that of the formation (13) connected to the housing (3).

## Patentansprüche

1. Halterungsaufbau für einen Wagenheber mit:
- einem Gehäuse (3), das in das Reserverad (R) des Fahrzeugs eingesetzt werden kann und einen Hohlraum bildet;
- einer freigebbaren Verankerungseinrichtung (4), um das Gehäuse (3) an der Fahrzeugkarosserie (V) zu befestigen, wobei die Verankerungseinrichtung der Basis (11) des Gehäuses (3) zugeordnet ist und eine geschlossene Stellung, in der sowohl das Gehäuse (3) als auch das Reserverad (R) an der Karosserie (V) befestigt sind, sowie eine offene Stellung einnehmen kann, in der sowohl das Gehäuse (3) als auch das Reserverad (R) von der Karosserie (V) entfernt werden können; wobei
die Verankerungseinrichtung ein Paar von Formteilen (5, 13) enthält, von denen einer dazu vorgesehen ist, um an der Karosserie (V) befestigt zu werden, und der andere mit dem Gehäuse (3) verbunden ist, wobei diese Formteile (5, 13) ineinander eingreifen können und so geformt sind, dass man einen Durchgang der Verankerungseinrichtung (4) von der offenen Stellung zur geschlossenen Stellung oder von der geschlossenen Stellung zur offenen Stellung durch ein Verdrehen des Formteils (13), der mit dem Gehäuse (3) verbunden ist, gegenüber dem Formteil (5) erreichen kann, der dazu vorgesehen ist, um an der Fahrzeugkarosserie (V) befestigt zu werden, wobei
der Aufbau **dadurch gekennzeichnet ist, dass** man den Durchgang der Verankerungseinrichtung (4) zwischen der offenen Stellung und der geschlossenen Stellung oder zwischen der geschlossenen Stellung und der offenen Stellung dadurch erreichen kann, dass der Formteil (13), der mit dem Gehäuse (3) verbunden ist, gegenüber dem Formteil (5), der dazu vorgesehen ist, um an der Karosserie (V) befestigt zu werden, um die Achse des Reserverads (R) um etwa 90° verdreht wird, und
dass der Hohlraum so geformt ist, dass er den Wagenheber (M) aufnehmen kann.

2. Aufbau gemäß Anspruch 1, **dadurch gekennzeichnet, dass** der Formteil (13), der mit dem Gehäuse (3) verbunden ist, am Gehäuse (3) starr befestigt ist, und dass das Gehäuse (3) in der Nähe zu seinem Ende, das gegenüber der Basis (9) liegt, Griffteile (20) besitzt, um das Drehen mit der Hand zu unterstützen.

3. Aufbau gemäß irgendeinem der Ansprüche 1 bis 2, **dadurch gekennzeichnet, dass** das Paar von Formteilen ein Eingreifelement (5) enthält, das mit zumindest einem radial vorspringenden Element (14a) versehen ist, sowie einen geformten Körper (13) enthält, der eine Öffnung (15) besitzt, um das zumindest eine vorspringende Element (14a) einzusetzen, wobei die Öffnung (15) neben zumindest einer Nockenfläche (17) angeordnet ist, die mit dem zumindest einen vorspringenden Element (14a) gleitend in Eingriff treten kann, wenn die Verankerungseinrichtung (4) von der offenen Stellung zur geschlossenen Stellung oder von der geschlossenen Stellung zur offenen Stellung läuft.

4. Aufbau gemäß Anspruch 3, **dadurch gekennzeichnet, dass** das Eingreifelement (5) ein Paar von einander diametral gegenüber liegenden Vorsprungselementen (14a) besitzt und dazu vorgesehen ist, um an der Fahrzeugkarosserie (V) befestigt zu werden, wobei der geformte Körper (13) auf der Basis (11) des Gehäuses (3) so ausgebildet ist, dass das Paar von Vorsprungselementen (14a) eingesetzt werden kann.

5. Aufbau gemäß Anspruch 3 oder Anspruch 4, **dadurch gekennzeichnet, dass** jede der Nockenflächen (17) eine geneigte Rampe (17b) sowie einen Haltebereich (17c) besitzt, der an die geneigte Rampe (17b) angrenzt und in der geschlossenen Stellung der Verankerungseinrichtung (4) ein zugeordnetes vorsprungselement (14a) aufnehmen kann.

6. Aufbau gemäß Anspruch 5, **dadurch gekennzeichnet, dass** ein Anschlag (18), der das Ende der Gleitbewegung eines zugeordneten Vorsprungselements (14a) bestimmt, auf der Nockenfläche (17) an einem Ende des Haltebereichs (17c) gegenüber der zugeordneten Rampe (17b) vorhanden ist.

7. Aufbau gemäß Anspruch 5 oder Anspruch 6, **dadurch gekennzeichnet, dass** der Aufbau gegenseitige Einspanneinrichtungen (16, 19) für ein Vorsprungselement (14a) sowie einen zugeordneten Haltebereich (17c) in der geschlossenen Stellung der Verankerungseinrichtung (4) aufweist.

8. Aufbau gemäß Anspruch 7, **dadurch gekennzeichnet, dass** die Einspanneinrichtung einen axialen Vorsprung (16) sowie einen entsprechenden Sitz (19) aufweist, von denen einer auf dem vorspringenden Element (14a) des Eingreifelements (5) und der andere auf einem Haltebereich (17c) an Stellen ausgebildet ist, die der geschlossenen Stellung der Verankerungseinrichtung (4) entsprechen.

9. Aufbau gemäß irgendeinem der Ansprüche 1 bis 8, **dadurch gekennzeichnet, dass** das Gehäuse Aufnahmen (10a, 10b, 10c) enthält, um Werkzeuge zu halten und zu verriegeln.

10. Aufbau gemäß irgendeinem der Ansprüche 1 bis 9, **dadurch gekennzeichnet, dass** der Formteil (5), der dazu vorgesehen ist, um an der Karosserie (V) befestigt zu werden, in einer Farbe gehalten ist, die im Kontrast zur Farbe des Formteils (13) steht, der mit dem Gehäuse (3) verbunden ist.

## Revendications

1. Ensemble de rangement pour cric comprenant :
- un boîtier (3) qui peut être logé dans la roue de secours (R) du véhicule et qui définit une cavité ;
- un moyen d'ancrage amovible (4) pour fixer le boîtier (3) à la carrosserie (V) du véhicule, associé à la base (11) du boîtier (3) et apte à prendre une position fermée dans laquelle le boîtier (3) et la roue de secours (R) sont tous deux fixés à la carrosserie (V), et une position ouverte dans laquelle le boîtier (3) et la roue de secours (R) peuvent être retirés de la carrosserie (V) ;
dans lequel le moyen d'ancrage comprend une paire d'éléments (5, 13), l'un destiné à être fixé au corps (V) et l'autre connecté au boîtier (3), ces éléments (5, 13) pouvant être mutuellement mis en prise et ayant une forme telle que le passage du moyen d'ancrage (4) de la position ouverte à la position fermée, ou de la position fermée à la position ouverte, peut être obtenu en faisant tourner l'élément (13) connecté au boîtier (3) par rapport à l'élément (5) destiné à être fixé à la carrosserie (V) du véhicule, ledit ensemble étant **caractérisé en ce que** le passage du moyen d'ancrage (4) de la position ouverte à la position fermée, ou de la position fermée à la position ouverte, peut être obtenu en faisant tourner d'environ 90° autour de l'axe de la roue de secours (R) l'élément (13) connecté au boîtier (3) par rapport à l'élément (5) destiné à être fixé à la carrosserie (V), et **en ce que** ladite cavité a une forme conçue pour recevoir le cric (M).

2. Ensemble selon la revendication 1, **caractérisé en ce que** l'élément (13) connecté au boîtier (3) est fixé de manière rigide au boîtier (3), et **en ce que** le boîtier (3) comporte, à proximité de son extrémité opposée à la base (9), des parties poignées (20) pour aider sa rotation manuelle.

3. Ensemble selon l'une quelconque des revendications 1 à 2, **caractérisé en ce que** ladite paire d'éléments comprend un élément de mise en prise (5) muni d'au moins un élément faisant saillie radialement (14a), et un corps moulé (13) comportant une ouverture (15) pour l'insertion dudit élément saillant (14a), l'ouverture (15) étant placée au voisinage d'au moins une surface de came (17) pouvant être mise en prise à coulissement par ledit élément saillant (14a) lors du passage du moyen d'ancrage (4) de la position ouverte à la position fermée, ou de la position fermée à la position ouverte.

4. Ensemble selon la revendication 3, **caractérisé en ce que** l'élément de mise en prise (5) comporte une paire d'éléments saillants diamétralement opposés (14a) et est destiné à être fixé à la carrosserie (V) du véhicule, le corps moulé (13) étant formé sur la base (11) du boîtier (3) de manière à permettre l'insertion de ladite paire d'éléments saillants (14a).

5. Ensemble selon la revendication 3 ou 4, **caractérisé en ce que** chacune des surfaces de came (17) a une rampe inclinée (17b) et une zone d'arrêt (17c) contiguë à la rampe inclinée (17b) et capable de recevoir un élément saillant associé (14a) dans la position fermée du moyen d'ancrage (4).

6. Ensemble selon la revendication 5, **caractérisé en ce qu'**une butée (18) déterminant la fin du mouvement coulissant d'un élément saillant associé (14a) sur la surface de came (17) est présente en une extrémité de la zone d'arrêt (17c), en face de la rampe associée (17b).

7. Ensemble selon la revendication 5 ou 6, **caractérisé en ce qu'**il comprend des moyens de retenue mutuels (16, 19) pour un élément saillant (14a) et une zone d'arrêt associée (17c), dans la position fermée du moyen d'ancrage (4).

8. Ensemble selon la revendication 7, **caractérisé en ce que** lesdits moyens de retenue comprennent une protubérance axiale (16) et un siège correspondant (19), l'un formé sur l'élément saillant (14a) de l'élément de mise en prise (5) et l'autre sur une zone d'arrêt (17c), dans des positions correspondant à la position fermée du moyen d'ancrage (4).

9. Ensemble selon l'une quelconque des revendications 1 à 8, **caractérisé en ce que** le boîtier comprend des emplacements (10a, 10b, 10c) pour tenir et bloquer des outils.

10. Ensemble selon l'une quelconque des revendications 1 à 9, **caractérisé en ce que** l'élément (5) destiné à être fixé à la carrosserie (V) est d'une couleur qui contraste avec celle de l'élément (13) connecté au boîtier (3).
